# EUROPÄISCHE PATENTSCHRIFT

(11) **EP 3 575 066 B1**
(45) Veröffentlichungstag und Bekanntmachung des Hinweises auf die Patenterteilung: **10.11.2021**
(21) Anmeldenummer: 19176198.0
(22) Anmeldetag: 23.05.2019
(51) Int. Cl.: B29C 70/54, B29C 70/88, B29C 35/02, B29C 37/00, B29C 65/00, B29C 65/02, B29C 65/34, B29C 65/48, B29C 65/72, B29K 105/12, B29D 99/00, B29L 31/30, G01B 11/16

(54) **VERFAHREN ZUM HERSTELLEN EINES BAUTEILS AUS FASERVERBUNDWERKSTOFF**
METHOD FOR PRODUCING A COMPONENT MADE OF FIBRE COMPOSITE MATERIAL
PROCÉDÉ DE FABRICATION D'UN COMPOSANT D'UN MATÉRIAU COMPOSITE FIBREUX

(30) Priorität: 28.05.2018 DE 102018112684
(43) Veröffentlichungstag der Anmeldung: 04.12.2019
(73) Patentinhaber: Airbus Operations GmbH, 21129 Hamburg (DE)
(72) Erfinder: Linde, Peter, 21129 Hamburg (DE)
(74) Vertreter: KASTEL Patentanwälte PartG mbB

(56) Entgegenhaltungen:
- EP-A1- 3 501 801
- CN-A- 102 390 121

## Beschreibung

Die Erfindung betrifft ein Verfahren zum Herstellen eines Bauteils aus Faserverbundmaterial mit einem ersten Bereich mit dünnerer Materialstärke und einem zweiten Bereich mit dickerer Materialstärke.

Insbesondere betrifft die Erfindung ein Verfahren zum Herstellen eines Faserverbundmaterial-Bauteils für ein Fahrzeug, insbesondere ein Luftfahrzeug.

Strukturbauteile und Wandbauteile von Luftfahrzeugen, wie z.B. Flugzeugen, sind vielfach als Hautelemente mit Versteifungen aufgebaut. In jüngerer Zeit werden derartige Bauteile aus Faserverbundwerkstoff hergestellt.

Ein Beispiel für eine Vorrichtung und ein Verfahren zum Herstellen derartigen Faserverbund-Bauteile für Luftfahrzeuge ist in der US 2005/0127576 A1 gezeigt und beschrieben.

EP 3501801 A1 (nicht vorveröffentlicht, fällt unter Art. 54(3) EPÜ) offenbart ein Herstellverfahren für Bauteile aus Faserverbundwerkstoffen, insbesondere aus solchen mit thermoplastischer Matrix. Unter Anderem wird das Fügen von zwei Bauteilen offenbart, wobei auf den Verbindungsbereich der beiden Bauteile eine elektrisch leitfähige Schicht aufgelegt wird.

CN 102390121 A offenbart ein Verfahren zur Temperaturkompensation bei der Autoklavformgebung von duroplastischen Kohlenstofffaser-Kunststoffmaterialien, wobei Temperatur und Druck so kompensiert werden, dass beim Heißpressen ein gleichförmiges Temperaturfeld erreicht wird, indem in der Heisspressform eine Zusatzheizung vorgesehen wird und ein iteratives Verfahren zur Festlegung von dessen Position im Autoklaven und von Betriebsparametern der Zusatzheizung abhängig von zahlreichen u.a. physikalischen Parametern vorgesehen wird.

Der Erfindung liegt die Aufgabe zugrunde, ein Verfahren zum Herstellen eines Bauteils aus Faserverbundwerkstoff mit wenigstens einem Bereich dünnerer Materialstärke und einem Bereich dickerer Materialstärke zu schaffen, mit denen sich das Bauteil mit geringerem Aufwand passgenauer herstellen lässt.

Diese Aufgabe wird durch ein Verfahren mit den Schritten des Anspruches 1 gelöst.

Vorteilhafte Ausgestaltungen sind Gegenstand der Unteransprüche.

Es ist bevorzugt, dass Schritt c) umfasst:
lokales Beheizen eines Tiefenbereichs des zweiten Bereichs.

Es ist bevorzugt, dass Schritt c) umfasst:
lokales Beheizen eines Teilbereichs des ersten Bereichs.

Es ist bevorzugt, dass Schritt c) umfasst:
lokales Beheizen mittels des Remote-Joule-Heating-Effekts unter Verwendung von Kohlenstoffnanoröhren.

Es ist bevorzugt, dass das Bauelement ein Hautelement aufweist, an dem wenigstens ein Fuß eines Versteifungselementes angebracht sind, so dass die Kombination aus Fuß und Hautelement den zweiten Bereich bildet, und dass Schritt c) umfasst:
Lokales Beheizen eines ersten Teilbereichs des zweiten Bereichs, der relativ zu einer Mittelebene des Hautelements symmetrisch zu einem zweiten Teilbereich des zweiten Bereichs liegt, wobei sich der zweite Teilbereich in der quer zu der Mittelebene verlaufenden Dickenrichtung gesehen im Zentrum des zweiten Bereichs befindet.

Es ist bevorzugt, dass Schritt a) umfasst:
Ausbilden oder Formen des ersten Bereichs als Wandbereich eines Strukturbauteils eines Luftfahrzeugs und des zweiten Bereichs als mit einem Versteifungselement versehener Wandbereich des Strukturbauteils.

Es ist bevorzugt, dass Schritt a) umfasst:
Ausbilden oder Formen des Bauteils aus einem Faserverbundmaterial, welches Kohlenstofffasern in einem thermoplastischen oder duroplastischen Matrixmaterial enthält.

Es ist bevorzugt, dass Schritt a) umfasst:
Ausbilden des Bauteils als Bauteil aus der Gruppe von Bauteilen, die ein versteiftes Paneel für ein Luftfahrzeug, ein versteiftes Luftfahrzeugrumpfpaneel, ein versteiftes Luftfahrzeugflügelpaneel und ein versteiftes Hautelement eines Strukturbauteils eines Luftfahrzeuges enthält.

Es ist bevorzugt, dass Schritt a) umfasst:
Zusammensetzen des Bauteils aus wenigstens einem Versteifungselement und einem Hautelement.

Es ist bevorzugt, dass Schritt a) umfasst:
Verbinden eines Fußes eines Versteifungselements mit einem Hautelement.

Es ist bevorzugt, dass Schritt a) umfasst:
Ausbilden des ersten Bereichs durch Formen, Anbringen oder Anformen eines Fußes eines Versteifungselements an einem Wandbereich oder Hautbereichs des Bauteils.

Es ist bevorzugt, dass Schritt a) umfasst:
Anschweißen, Co-Härten oder Heißkleben eines Fußes eines Versteifungselements an ein Hautelement.

Es ist bevorzugt, dass Schritt a) umfasst:
Einbetten eines Temperaturbeeinflussungselements in wenigstens einen Bereich.

Es ist bevorzugt, dass Schritt a) umfasst:
Platzieren von Ketten, Streifen oder Schnüren aus Kohlenstoffnanoröhren in oder an dem zweiten Bereich.

Es ist bevorzugt, dass Schritt a) umfasst:
Platzieren von Ketten, Streifen oder Schnüren aus Kohlenstoffnanoröhren in oder an dem ersten Bereich.

Es ist bevorzugt, dass Schritt a) umfasst:
Ausbilden eines Gitters aus Kohlenstoffnanoröhren durch Aufbringen oder Auftragen eines Kohlenstoffnanoröhren enthaltenden Lösungsmittels.

Es ist bevorzugt, dass Schritt a) umfasst:
Schichtweises Verlegen von Faserlagen und Auftrag eines Temperaturbeeinflussungselements auf wenigstens eine Faserlage.

Es ist bevorzugt, dass Schritt a) umfasst:
Anbringen von länglichen Heizelementen unterhalb eines Fußes eines Versteifungselements.

Es ist bevorzugt, dass Schritt a) Einbetten wenigstens eines durch elektrischen Strom betriebenen Temperaturbeeinflussungselements in den wenigstens einen Bereich umfasst und dass Schritt c) Steuern oder Regeln eines Stromflusses zu dem wenigstens einen Temperaturbeeinflussungselement während des Abkühlens umfasst.

Einige besondere Effekte und Vorteile von bevorzugten Ausgestaltungen der Erfindung werden im Folgenden näher erläutert.

Mit bevorzugten Ausgestaltungen der Erfindung ist eine aktive Deformationssteuerung von Verbundwerkstoffen durch Kohlenstoffnanoröhren geschaffen.

Durch eine aktive Gegensteuerung gegen Deformationen können ungewollte Abweichungen im Bereich der Herstellung von Strukturbauteilen und Rahmenbauteilen von Fahrzeugen und insbesondere Luftfahrzeugen besser als bisher vermieden werden.

Beim Anbringen von Versteiferelementen, wie z.B. Spanten in einem Rumpf bzw. Ribs in einem Flügel, gibt es bei Verwendung von Verbundwerkstoffen häufig den Effekt, dass der kombinierte Querschnitt aus Versteiferfuß plus Haut im Inneren langsamer abkühlt als die unversteifte Haut. Dies erzeugt thermische Spannungen, die im ungünstigsten Fall zu Deformationen führen können.

Gemäß der Erfindung wird ein Verfahren zum Herstellen eines Bauteils aus einem Faserverbundmaterial gemäß den Ansprüchen geschaffen. Die Tendenz zu Deformationen, die bei einer Ausbildung mit Bereichen dünnerer Materialstärke und Bereichen dickerer Materialstärke aufgrund langsamerer Abkühlung im Inneren des Bereiches der dickeren Materialstärke bei Fertigungsprozessen unter Anwendung von Wärme bei einem anschließenden Abkühlen auftreten können, werden durch eine lokale Beeinflussung der Temperatur im Inneren wenigstens eines der Bereiche während des Abkühlens entgegengewirkt.

Die lokale Beeinflussung der Temperatur im Inneren kann durch unterschiedliche Maßnahmen bewirkt werden. Beispielsweise könnten Kühlelemente an vorbestimmten Stellen in dem Bauteil eingebracht werden.

Konstruktiv einfacher ist die Einbringung eines Temperaturbeeinflussungselements in Form eines Heizelements in wenigstens einem der Bereiche. Besonders bevorzugt wird ein Heizelement aus einem Material, welches auch innerhalb des Bauteils Verwendung findet, wie beispielsweise aus Kohlenstoff, eingesetzt.

Besonders bevorzugte Ausgestaltungen der Erfindung nutzen neuere Kenntnisse aus der Kohlenstoffnanoröhren-Technologie (Englisch: carbon nano tube, kurz: CNT), womit man gezielt Heizeffekte in Laminaten erzeugen kann. Mit bevorzugten Ausgestaltungen des Verfahrens und der Vorrichtung gemäß der Erfindung können fertigungstechnikbezogenen Deformationen und/oder thermischen Deformationen entgegengewirkt werden. Insbesondere ist es somit bei versteiften Hautelementen zur Verwendung an der Außenhaut von Luftfahrzeugen möglich, perfekt planare Außenoberflächen mit geringerem technischen Aufwand als bisher herzustellen.

Insbesondere bei der Verwendung an Flügeloberflächen lassen sich somit einfacher als bisher laminare Strömungen ohne lokale Störungen sicherstellen. Bevorzugte Ausgestaltungen der Erfindung nutzen den Remote-Joule-Heating-Effekt, der vor Kurzem bei der Verwendung von Kohlenstoffnanoröhren entdeckt worden ist. Gemäß diesem Effekt lässt sich durch Kohlenstoffnanoröhren, durch welche Strom geleitet wird, eine Erhitzung in einem das Kohlenstoffnanoröhren umgebenden Material weiter entfernt von dem Kohlenstoffnanoröhren erzeugen, wobei das Kohlenstoffnanoröhren selbst eine geringere Temperatur beibehält.

Die Temperatur im inneren des zweiten Bereichs wird lokal mit Temperaturbeeinflussungselementen beeinflusst, welche ― z.B. unter Ausnutzung von Wirbelstromeffekten, induktiven Effekten, Anregungen, Strahlungen - eine Temperaturveränderung im Inneren des Bauteils bewirken können. Ein bevorzugter Effekt bevorzugter Ausgestaltungen dieser Erfindung ist eine aktive Deformationssteuerung während der Herstellung von versteiften Verbundmaterialpaneelen mittels strategisch platzierter Ketten, Streifen oder Schnüre von Kohlenstoffnanoröhren innerhalb der Verbundmateriallaminaten. Vorzugsweise wird ein Tiefenbereich des zweiten Bereichs mit dickerer Materialstärke mittels des Remote-Joule-Heizeffekts erwärmt, um so thermisch induzierten Deformationen entgegenzuwirken.

Einige Vorteile bevorzugter Ausgestaltungen der Erfindung sind:
- Ein schnelles Zusammenfügen von Haut bzw. Hautelement und Versteifung bzw. Versteifungselementen ist ermöglicht.
- Während des Zusammenfügungsprozesses ist eine hohe Genauigkeit erreichbar; ein vorgeschriebenes Profil kann mit sehr geringeren Fertigungstoleranzen erreicht werden.
- Die Temperatur in und/oder an Temperaturbeeinflussungselementen kann gesteuert werden und feinjustiert werden, ganz nach Bedürfnissen während des Abkühlprozesses.
- Insbesondere kann eine Temperatur in und/oder an CNT-Streifen kontrolliert und feinjustiert werden und an Bedürfnisse während des Abkühlprozesses angepasst werden.
- Hier beschriebene Ideen können sowohl für Duroplaste als auch für Thermoplaste verwendet werden.
- Bei bevorzugten Ausgestaltungen gibt es keine Fremdobjekte in dem Verbundmateriallaminat.
- Während bisher eine größere Hautdicke ausgewählt worden ist, um den Einfluss von möglichen Deformationen durch den Versteifungselementfuß zu reduzieren, ist nun eine dünnere Hautdicke mit gleicher oder besserer Performance möglich.
- Besonders einfach lässt sich das Einbetten eines Temperaturbeeinflussungselements durch Auftrag eines Lösungsmittels, welches lange Kohlenstoffnanoröhren enthält, und eine Lösungsmittelauftragseinrichtung zum Auftragen dieser Lösung erreichen. Die Länge der Kohlenstoffnanoröhren ist so ausgebildet, dass sich gut Gitter aus Kohlenstoffnanoröhren ausbilden lassen.

Vorteilhafterweise wird eine elektrische Stromquelle mit variablem Stromausgang zum Ansteuern eines Heizelements, insbesondere von CNT-Streifen, verwendet.

Vorzugsweise wird die Temperatur geregelt.

Hierzu kann eine Temperaturmesseinrichtung und eine Steuereinrichtung zum automatischen Regeln vorgesehen sein.

Weiter bevorzugt erfolgt eine Steuerung der Temperaturbeeinflussung abhängig von einer Deformationserfassungseinrichtung, die zur Erfassung einer Deformation an dem Bauteil ausgebildet ist.

Die Erfassung der Deformation kann durch unterschiedliche Techniken erfolgen. Vorzugsweise erfolgt die Erfassung mittels optischer Verfahren. Beispielsweise kann eine Messung einer Abweichung von einem perfekten geradlinigen Oberflächenverlauf mittels eines Laserstrahls gemessen werden.

Die hier beschriebenen Techniken sind insbesondere für Verbundelemente und mehr insbesondere für Hautelemente mit daran platzierten Versteifungselementen geeignet.

Im Folgenden wird die Erfindung anhand der beigefügten Zeichnungen näher erläutert. Dabei zeigen:
- Fig. 1: eine schematische perspektivische Darstellung eines Bereichs eines Bauteils für ein Luftfahrzeug, wobei das Bauteil aus einem Faserverbundmaterial gebildet ist und einen ersten Bereich mit dünnerer Materialstärke und einen zweiten Bereich mit dickerer Materialstärke aufweist und wobei mögliche Abweichungen von der vorgegebenen Form dargestellt sind;
- Fig. 2: einen Schnitt durch einen ersten Bereich dünnerer Materialstärke und einen zweiten Bereich dickerer Materialstärke des Bauteils von Fig. 1 zur Erläuterung einer Ursache der möglichen Abweichungen;
- Fig. 3: eine schematische perspektivische Darstellung einer mit Strom beaufschlagten Kohlenstoffnanoröhre als Ausführungsbeispiel für ein Temperaturbeeinflussungselement und zur Erläuterung des RemoteJoule-Heating-Effekts;
- Fig. 4: eine schematische perspektivische Darstellung eines Tiefenbereichs des zweiten Bereichs des Bauteils, welcher mit einer Kohlenstoffnanoröhre als Ausführungsbeispiel für ein Temperaturbeeinflussungselement versehen ist, zur weiteren Erläuterung des Remote-Joule-Heating-Effekts;
- Fig. 5: eine perspektivische schematische Darstellung einer Station einer Vorrichtung zum Herstellen des Bauteils aus Faserverbundmaterial;
- Fig. 6: eine schematische perspektivische Darstellung einer weiteren Station der Vorrichtung zum Herstellen des Bauteils, wobei ein Ausführungsbeispiel des Bauteils mit dem ersten Bereich mit dünnerer Materialstärke und dem zweiten Bereich mit dickerer Materialstärke und Temperaturbeeinflussungselementen teils perspektivisch und teils im Schnitt dargestellt ist;
- Fig. 7: eine Vergrößerung eines Details aus Fig. 6; und
- Fig. 8: eine schematische Darstellung eines Flugzeugs als Beispiel für ein Luftfahrzeug, welches ein mit der Vorrichtung nach Fig. 5 und 6 herstellbares Bauteil enthält.

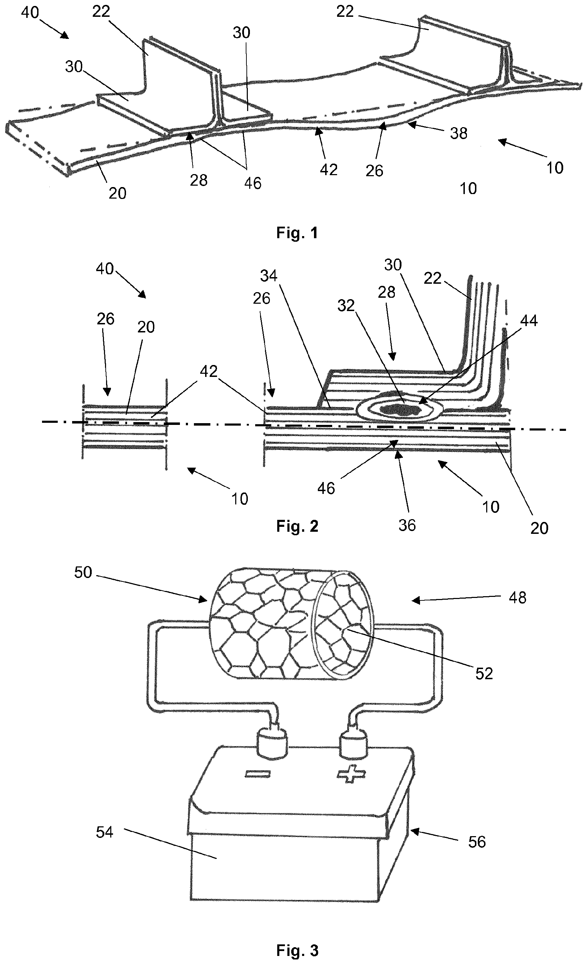

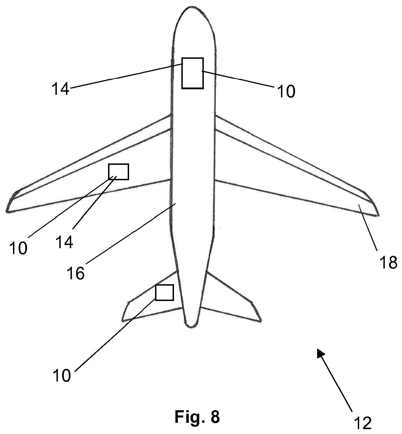

Fig. 1 zeigt teilweise im Schnitt und teilweise perspektivisch dargestellt ein Bauteil 10 für ein Fahrzeug, wie insbesondere ein Luftfahrzeug 12 (siehe Fig. 8). Das Bauteil 10 ist beispielsweise eine flächiges Strukturbauteil 14 und kann insbesondere ein Paneel oder einen Wandbereich 14 eines Rumpfes 16 oder eines Flügels 18 des Luftfahrzeuges 12 bilden.

Bei dem dargestellten Beispiel ist das Bauteil 10 ein Hautelement 20, welches mit Versteifungselementen 22 versehen ist. Es kann beispielsweise ein Teilbereich des Rumpfes 16 sein, wobei ein Hautelement 20 mit Spanten als Versteifungselemente 22 versteift ist. Es kann auch ein Wandbereich 14 bzw. eine Abdeckung des Flügels 18 sein, wobei ein Hautelement 20 mit Rippen als Versteifungselement 22 versehen ist.

Sowohl das Hautelement 20 als auch das Versteifungselement 22 sind aus Verbundmaterial 24, insbesondere Faserverbundmaterial, gebildet, welches in eine Matrix eingebettete Fasern, vorzugsweise Kohlenstofffasern, enthält.

Das Bauteil 10 kann mit Hautelement 20 und Versteifungselementen 22 gemäß einer Ausgestaltung einstückig in einer Form geformt werden. Bei einer anderen Ausgestaltung werden das Hautelement 20 und das Versteifungselement 22 getrennt voneinander herstellt und dann zusammengefügt.

Das Zusammenfügen kann je nach Ausgestaltung des Verbundmaterials 24 erfolgen. Beispielsweise kann die Matrix thermoplastisch oder duroplastisch - d.h. warmaushärtend - ausgebildet sein.

Bei einer thermoplastischen Ausbildung können das Hautelement 20 und das Versteifungselement 22 z.B. durch Verschweißen miteinander verbunden werden. Bei einer duroplastischen Ausbildung können das Hautelement 20 und das Versteifungselement 22 z.B. durch gemeinsames Aushärten - Co-Bonding oder Co-Härten - verbunden werden. Auch Heißkleben kommt in Betracht.

Das Ausbilden des Bauteils 10 und insbesondere das Zusammenfügen von Hautelement 20 und Versteifungselement 22 erfolgt unter Anwendung von Wärme, wonach das Bauteil 10, z.B. zum Aushärten, abgekühlt wird.

Das Bauteil 10 hat einen ersten Bereich 26 mit dünnerer Materialstärke und einen zweiten Bereich 28 mit dickerer Materialstärke. Der erste Bereich 26 ist insbesondere durch den nicht mit Versteifungselementen 22 versehenen Bereich des Hautelements 20 gebildet. Der zweite Bereich 28 ist insbesondere ein mit dem Versteifungselement 22 versehener Bereich. Durch das Anbringen eines Fußes 30 des Versteifungselements 22 ergibt sich an dem zweiten Bereich 28 eine dickere Materialstärke als an dem ersten Bereich 26.

Fig. 2 zeigt den ersten Bereich 26 und den zweiten Bereich 28 getrennt im Schnitt. Dabei ist angedeutet, dass beim Abkühlen ohne weitere Maßnahmen ein innerer Bereich 32 (Beispiel für einen zweiten Teilbereich) in dem dickeren zweiten Bereich 28 länger heiß bleibt als mehr oberflächennahe Bereiche. In dieser Situation dehnt sich der innere Bereich 32 an der Verbindungsstelle 34 zwischen dem Hautelement 20 und dem Fuß 30 aus, während die dem Fuß 30 gegenüberliegende Oberfläche 36 und die oberflächennahen Bereiche (Beispiel für einen ersten Teilbereich 46) im Inneren des Hautelements 20 bereits abgekühlt sind und sich entsprechend weniger ausdehnen. Dies kann zu herstellungsbezogenen Deformationen 38 führen, die in Fig. 1 durch durchgezogene Linien dargestellt sind.

Fig. 1 zeigt eine Haut-Versteifungselement-Anordnung 40, wobei herstellungsbezogene Deformationen der Haut 42 durch durchgezogene Linien angedeutet sind.

Während der Herstellung von versteiften leichtgewichtigen Bauteilen 10 aus Verbundmaterial, wie z.B. versteiften Luftfahrzeugrumpfpaneelen, versteiften Flügelabdeckungen usw., ist die kombinierte Laminatdicke des Versteifungselement-Fußes 30 zusammen mit der Haut 42 beträchtlich größer als die Dicke der Haut 42 alleine. Während die Haut 42 alleine nach einem Erhitzen gewöhnlicherweise in einer nicht deformierten Weise abkühlen wird, führt die größere Dicke der Kombination aus Versteifungselement-Fuß 30 plus Haut 42 dazu, dass das Abkühlen länger stattfindet und für einige Weile eine Wärmeverteilung verbleiben wird, bei welcher das Zentrum 44 relativ zu der Mittelebene der Haut 42 exzentrisch angeordnet ist. Dies kann dazu führen, dass sich die Haut 42 während des Abkühlungsprozesses, wie in Fig. 1 mit durchgezogenen Linien dargestellt, deformiert.

In Fig. 2 ist zu sehen, dass der dunkler hervorgehobene innere Bereich 32, welcher sich näher zu der Fügestelle bzw. Verbindungsstelle 34 zwischen dem Fuß 30 und der Haut 42 befindet, eine höhere Temperatur aufweist und somit stärker expandiert. Dies kann zu einem Deformationsmuster entlang der Haut 42 gesehen führen.

Fig. 2 zeigt das Verfahren in einer Detaildarstellung der unversteiften Haut 42 in der linken Teildarstellung, welche während des Abkühlens keine signifikante thermische Deformationen erleidet, und in der rechten Darstellung die Kombination aus Versteifungselement-Fuß 30 und Haut 42, die während des Abkühlens eine erhöhte Temperatur mit einem Zentrum 44 nahe des Zentrums der kombinierten Dicke aufweist. In dem zweiten Bereich 28 hat die Haut 42 somit eine erhöhte Temperatur an der oberen Oberfläche und eine bereits abgekühlte Bodenoberfläche 36, was zu thermisch induzierten Deformationen der Haut 42 führen kann.

Speziell für die Anwendung an Flügelabdeckungen können derartige Deformationen 38 das Ausbilden einer laminaren Strömung behindern. Dies wiederum kann zu einem beträchtlichen Treibstoffverbrauch für das Luftfahrzeug 12 führen. Dies gilt im Prinzip sowohl für thermoplastische Verbundmaterialien 24 als auch für duroplastische Verbundmaterialien. Bisherige Ansätze zum Vermeiden derartiger Deformationen führen zu hohem konstruktiven Aufwand entweder am Bauteil 10 durch Verwendung weitaus dickerer als optimal möglicher Dicken für die Haut 42 und/oder an Werkzeugen zum Formen des Bauteils 10.

Um derartige Deformationen 38 zu vermeiden, wird hier ein Verfahren vorgeschlagen, in dem die Temperatur im Inneren wenigstens einer der Bereiche 26, 28 lokal und gezielt beeinflusst wird.

Vorzugsweise wird hierzu die Temperatur im Inneren der Haut 42 nahe der dem Fuß 30 gegenüberliegenden Oberfläche 36 beeinflusst, beispielsweise erhöht. Vorzugsweise wird die Temperatur derart beeinflusst, dass sich in dem dickeren zweiten Bereich 28 eine Wärmeverteilung einstellt, die mehr symmetrisch zu der Mittelebene der Haut 42 ausgebildet ist.

Dies wird durch lokales Beheizen eines ersten Teilbereichs 46 des zweiten Bereichs 28 geschehen, der sich näher zu der gegenüberliegenden Oberfläche 36 befindet als der sonst das Zentrum 44 der Wärmeverteilung aufweisende innere Bereich 32.

Das Beeinflussen der Temperatur erfolgt mit in das Bauteil 10 eingebetteten Temperaturbeeinflussungselementen 48, die weiter vorzugsweise als Heizelemente 50 ausgebildet sind.

Die Temperaturbeeinflussungselemente 48 sind weiter vorzugsweise steuerbar, so dass gezielt die lokale Temperaturbeeinflussung erfolgen kann.

Hierzu wird bei einer besonders bevorzugten Ausgestaltung die Deformation des Bauteils 10 und/oder eine mechanische Spannung an dem Bauteil 10 bemessen und die Temperatur in Abhängigkeit von der Deformation und/oder der Spannung beeinflusst. Hierdurch erreicht man eine Vermeidung der Ausbildung von Deformationen, so dass sich z.B. ein geradliniger Verlauf der Haut 42 einstellt, wie er in Fig. 1 durch strichpunktierte Linien angedeutet ist.

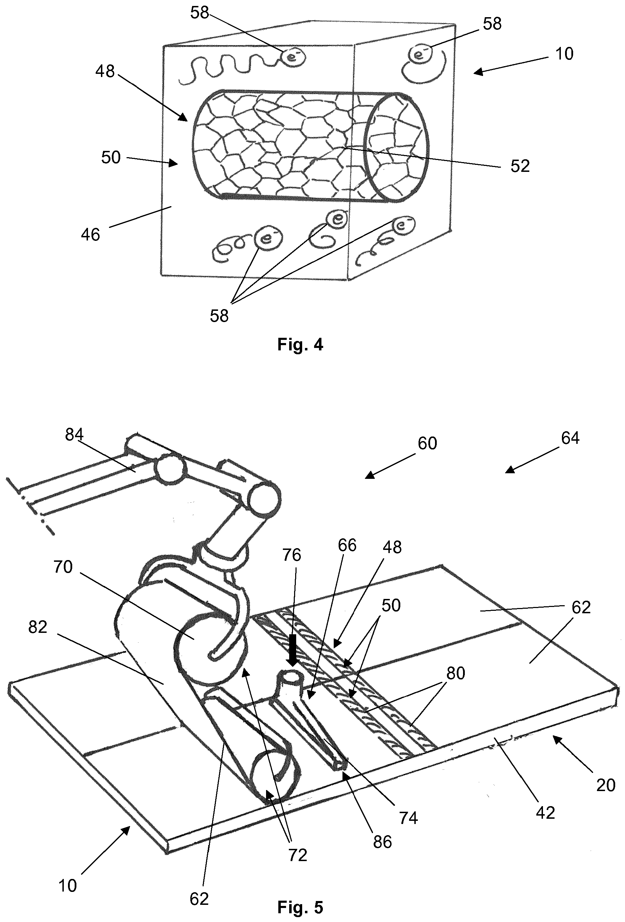

Ein bevorzugtes Ausführungsbeispiel für das Temperaturbeeinflussungselement 48 wird im Folgenden anhand der Darstellung in den Fig. 3 und 4 näher erläutert. Das als Heizelement 50 ausgebildete Temperaturbeeinflussungselement 48 weist vorzugsweise Kohlenstoffnanoröhren 52 - im Folgenden auch kurz CNT genannt - auf. Fig. 3 zeigt eine schematische Darstellung einer Kohlenstoffnanoröhre 52, durch die ein Strom aus einer beispielsweise als Batterie 54 ausgebildeten Stromquelle 56 fließt. Fig. 4 zeigt die Kohlenstoffnanoröhre 52, eingebettet in dem Bauteil 10, insbesondere in einer Umgebung aus Matrixmaterial.

Die Ausführungsbeispiele für das Temperaturbeeinflussungselement 48 unter Verwendung von Kohlenstoffnanoröhren 52 beruhen auf jüngeren wissenschaftlichen Erkenntnissen, die sich mit der Wirkung von Kohlenstoffnanoröhren 52 befassen, welche elektrischem Strom ausgesetzt wird, wie dies in Fig. 3 dargestellt ist, und in ein umgebendes Material eingesetzt wird. Dabei beginnen Elektronen 58 in den Molekülen in der Nähe der Kohlenstoffnanoröhre 52 zu schwingen, wie dies in Fig. 4 angedeutet ist. Diese Schwingung verursacht ein lokales Beheizen des Materials, welches recht beträchtlich sein kann. Dieser Effekt ist als "Remote-Joule-Heating"-Effekt bekannt geworden. Für nähere Einzelheiten wird auf die folgende Literaturstelle verwiesen:
Baloch et al.: "Remote-Joule-Heating by a carbon nano tube", Nature Nano Technology, Volume 7, Mai 2012, Seite 316 bis 319, veröffentlich online am 08.04.2012, DOI: 10.1038/NNANO.2012.39

Weiter hat es in jüngster Zeit einen Fortschritt in der Nanotechnologie insoweit gegeben, dass CNT-Gitter leicht an einer Oberfläche, z.B. eines Verbundmaterials, platziert werden können. Dies erfolgt beispielsweise durch Ausschütten oder sonstiges Auftragen einer Lösung, die lange Kohlenstoffnanoröhren 52 enthält, über diese Oberfläche unter kontrollierten Bedingungen. Da die Kohlenstoffnanoröhren 52 lang sind, berühren sie sich ab einer bestimmten Dichte der Lösung oder kreuzen einander und formen so ein Gitter. Die Regularität solcher Kohlenstoffnanoröhrengitter ist in den jüngsten Jahren immer mehr verbessert worden. Entsprechende Lösungen und Mittel können auf dem Markt von mehreren Laboren, Instituten und Firmen erhalten werden.

Der zuvor anhand der Fig. 3 und 4 erläuterte Remote-Joule-Heating-Effekt wird bei einer bevorzugten Ausgestaltung eines Verfahrens zum Herstellen des Bauteils 10 nun an einem versteiften Verbundmaterialpaneel angewandt.

Fig. 5 zeigt eine erste Station zum Herstellen des Bauteils 10, umfassend eine Faserlegeeinrichtung 60 zum Verlegen und Ausbilden von Faserlagen 62. Weiter umfasst die Vorrichtung 64 eine Temperaturbeeinflussungselementaufbringeinrichtung 66 zum Aufbringen des hier z.B. als Heizelement 50 ausgebildeten Temperaturbeeinflussungselements 48 auf wenigstens eine der Faserlagen 62.

Die Faserlegeeinrichtung 60 kann sehr unterschiedlich ausgestaltet sein. Bei einer nicht näher dargestellten Ausgestaltung werden die Fasern zu einer Vorform verlegt, wobei anschließend die Vorform mit einer Matrix infiltriert wird, um so die als Laminate ausgebildeten Faserlagen 62 zu bilden.

Bei der dargestellten Ausführungsform werden Bahnen 68 aus Faserverbundmaterial von einer entsprechenden Rolle durch einen Bahnverlegekopf 72 verlegt. Eine entsprechend verlegte Bahn 68 bildet dann die Faserlage. Die Bahnen 68 sind aus Kohlenstofffasern in einer Matrix gebildet, welche thermoplastisch oder duroplastisch sein kann.

Die Temperaturbeeinflussungselementaufbringeinrichtung 66 weist in der bevorzugten gezeigten Ausgestaltung eine Lösungsmittelauftragseinrichtung 74 zum Auftragen des mit CNTs mit ausreichend langer Länge zum Ausbilden eines Gitters beladenen Lösungsmittels. Die Lösungsmittelauftragseinrichtung 74 kann beispielsweise als Spender für das Lösungsmittel ausgebildet sein. Die Lösungsmittelauftragseinrichtung 74 ist zum linienartigen Auftragen von Lösungsmittel 76 in einer Richtung quer zur Länge der entsprechenden Bahnen 68 auf eine der durch den Bahnverlegekopf 72 verlegten Bahn ausgebildet. Entsprechend bilden sich entlang des Auftrags des Lösungsmittels 76 Ketten, Streifen 80 oder Schnüre aus Kohlenstoffnanoröhren 52 als Heizelement 50 aus.

Auf die dann in Fig. 5 gezeigte Struktur kann durch den Bahnverlegekopf 72 eine weitere Bahn 68 verlegt werden, so dass die Kette 80 aus CNT-Gitter als Heizelement 50 in der durch mehrfaches Verlegen der Bahnen 68 als Laminat aufgebauten Haut 42 eingebettet ist.

Die Temperaturbeeinflussungselementaufbringeinrichtung 66 ist derart gesteuert, dass die Temperaturbeeinflussungselemente 48 insbesondere an denjenigen Stellen in Längsrichtung der Haut 42 angebracht werden, an denen in einem nachfolgenden Schritt Füße 30 von Versteifungselementen 22 angebracht werden.

Fig. 5 zeigt die Haut 42 des beispielsweise als Paneel ausgebildeten Bauteils 10 während seiner Herstellungsphase. Im linken Bereich ist der Bahnverlegekopf 72 mit der Rolle mit einem faserverstärkten Kunststoffband 82 gezeigt, welches als Bahn 68 auf dem Paneel verlegt wird. Der Bahnverlegekopf 72 ist beispielsweise an einem Roboterarm 84 befestigt. Streifen 80 aus Kohlenstoffnanoröhren-Gitter werden quer über das Paneel mit bestimmten Abständen verlegt. Diese werden aus einem länglichen Spender 86 der Lösungsmittelauftragseinrichtung 74 ausgegossen, an welcher ein nicht näher dargestellter Behälter mit einem CNT-Lösungsmittel verbunden ist.

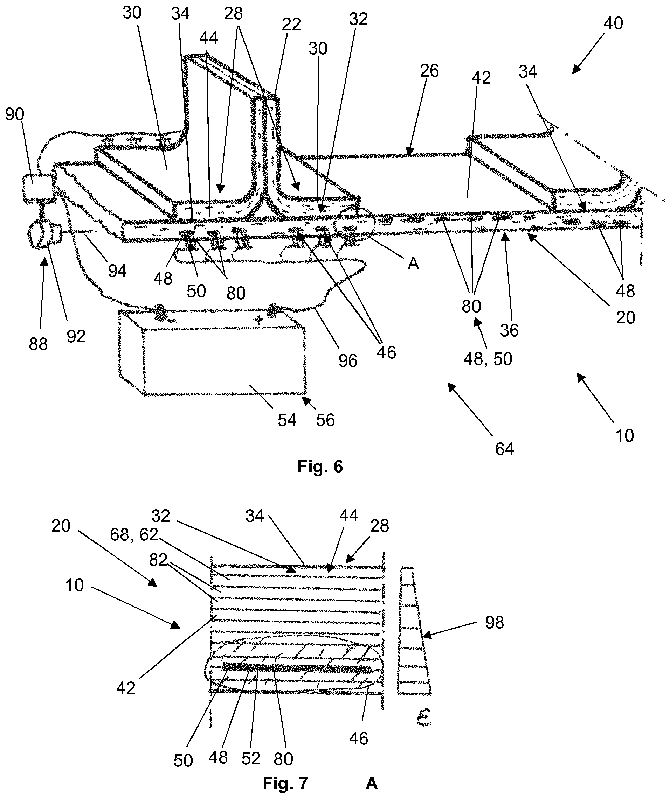

An die so hergestellte Haut 42 werden in einer in Fig. 6 gezeigten Station der Vorrichtung 64 mittels einer Versteifungselementanbringeinrichtung die aus Faserverbundmaterial gebildeten Versteifungselemente 22 angebracht. Das Anbringen selbst erfolgt auf konventionelle Weise und ist hier nicht näher dargestellt. Je nach Matrixmaterial kann die Versteifungselementanbringeinrichtung eine Schweißeinrichtung zum thermoplastischen Anschweißen des Fußes 30 an die Haut 42 aufweisen. Das Anbringen des Fußes 30 kann z.B. bei einer duroplastischen Ausbildung des Matrixmaterial durch Co-Härten der Haut 42 und des Fußes 30 erfolgen. Hierbei werden das Hautelement 20 und das Versteifungselement 22 in noch nicht ausgehärtetem Zustand aneinandergefügt und anschließend unter Anwendung von Wärme zusammen gehärtet. Eine andere mögliche Variante wäre das Verbinden von Hautelement 20 und Versteifungselement 22 mittels eines Heißklebers.

Fig. 6 zeigt die Station der Vorrichtung 64, wo die entsprechende Haut-Versteifungselement-Anordnung 40, gebildet aus Haut 42 mit mehreren Versteifungselementen 22, nach der Wärmeanwendung zum Zusammenfügen von Hautelement 20 und Versteifungselement 22 auch einem Abkühlungsprozess unterworfen wird.

An dieser Station weist die Vorrichtung 64 eine Deformationserfassungseinrichtung 88 zur Erfassung einer Deformation an dem Bauteil 10 auf. Weiter ist eine Steuereinrichtung 90 zum Ansteuern der Temperaturbeeinflussungselemente 48 dargestellt.

Die Deformationserfassungseinrichtung 88 weist beispielsweise einen Laser mit einer Laserlinse 92 auf, mit dem ein Laserstrahl 94 entlang der Oberfläche 36 der Haut 42 auf eine hier nicht näher dargestellte Fotodiode oder dergleichen geleitet werden kann. Wölbt sich die Haut 42 in Richtung des Laserstrahles 94 aus, führt dies zu einer Verringerung der von der Fotodiode gemessenen Lichtintensität.

Die Steuereinrichtung 90 ist an die Deformationserfassungseinrichtung 88 angeschlossen, um die Temperaturbeeinflussungselemente 48 abhängig von einem Signal der Deformationserfassungseinrichtung 88 zu steuern. Beispielsweise weist die Steuereinrichtung 90 einen steuerbaren Widerstand auf, mit dem Strom aus der Stromquelle 56 geregelt werden kann. Fig. 7 zeigt das Detail A aus Fig. 6 mit einer beispielhaften Anordnung der Temperaturbeeinflussungselemente 48. Diese sind in dem ersten Teilbereich 46 nahe der den Versteifungselementen 22 gegenüberliegenden Oberfläche 36 angeordnet. So kann die Temperatur in diesem ersten Teilbereich 46 an die Temperatur in einem zweiten Teilbereich - innerer Bereich 32 - nahe der Verbindungsstelle 34 angepasst werden, um so Deformationen entgegenzuwirken.

Die Fig. 6 und 7 zeigen somit die Herstellung des Bauteils 10 in Form eines versteiften Verbundmaterialpaneels, wobei eine Haut 42 mit integrierten Streifen 80 aus CNT-Gitter vorgesehen sind, die Teil eines elektrischen Stromkreises 96 sind.

Über den elektrischen Stromkreis 96 und den Strom durch die Streifen 80 aus CNT-Gitter wird herstellungsbezogenen Deformationen aus einer unebenen Verteilung der Abkühlung entgegengewirkt, um so ein perfekt geradlinig verlaufendes Hautelement 20 zu schaffen. Demnach zeigt Fig. 6 eine mit dem Fertigungsverfahren in Fig. 5 gefertigtes Verbundmaterialhautelement 20 mit daran angebrachten Versteifungselementen 22.

In der Fig. 6 ist das Versteifungselement 22 zum Anbringen des Fußes 30 platziert. Das Anbringen kann für duroplastische Materialien durch einen Co-Härtungsprozess erfolgen, für thermoplastische Materialien kann das Anbringen z.B. durch thermoplastisches Schweißen erfolgen. Dabei wird jeweils Wärme erzeugt, die insbesondere dort länger verbleibt, wo der Querschnitt des Bauteils 10 dicker ist, also in den zweiten Bereichen 28.

Anstatt nun den Abkühlprozess in einer unkontrollierten Weise erfolgen zu lassen, was zu Deformationen, wie durch durchgezogene Linien in Fig. 1 angedeutet, führen könnte, werden bei dem hier vorgeschlagenen Verfahren speziell integrierte Streifen 80 aus CNT-Gitter in der Haut 42 verwendet. Diese Streifen 80 werden während des Bahnverlegungsprozesses vorzugsweise exakt an Verbindungsstellen 34 unterhalb dem Fuß 30 der Versteifungselemente 22 verlegt.

In der Darstellung von Fig. 6 sind diese Streifen 30 an eine Stromquelle 56, wie beispielsweise eine Batterie 54, angeschlossen und in einer geschlossenen Stromschleife eingebunden. Sobald elektrischer Strom durch die Streifen 80 aus CNT-Gitter fließt, beginnt das Heizen mit dem Remote-Joule-Heating-Effekt. Das Laminat wird durch diesen Effekt erhitzt. Der Effekt wirkt dem thermisch induzierten Effekt entgegen, der von dem Co-Härten oder dem thermoplastischen Schweißen der Haut mit dem Fuß 30 des Versteifungselements 22 her rührt.

Die Wirkung des Remote-Joule-Heating-Effekts alleine ist im Detail in Fig. 7 dargestellt.

Fig. 7 zeigt das Detail A von Fig. 6 mit dem in dem ersten Teilbereich 46 nahe der dem Fuß 30 gegenüberliegenden Oberfläche 36 eingebetteten Streifen 80 aus CNT-Gitter und ein Belastungsprofil 98, aus dem hervorgeht, dass die Erwärmung durch das so gebildete Heizelement 50 eine Belastung erzeugt, die einer Deformation durch die Wärme an der Verbindungsstelle 34 entgegenwirkt.

Während des Verbindens des Versteifungselements 22 bleibt die verbleibende Hitze - vom Schweißen oder vom Co-Aushärten - länger als in der Haut 42 alleine. So wird dem während des Abkühlens auftretenden Exzenter-Effekts durch den Remote-Joule-Heating-Effekt mittels der Streifen 80 aus CNT-Gitter entgegengewirkt. Der Laserstrahl 94 misst das aktuelle Level - die Deformation - der Verbundmaterial-Haut 42. Falls an irgendeiner Stelle Abweichungen auftreten, wird automatisch ein Signal zu dem elektrischen Stromkreis 96 des Remote-Joule-Heating-Effekts geleitet.

Wie in Fig. 6 weiter angedeutet, kann die Haut 42 auch in dem ersten Bereich 26, dem freien Feldbereich zwischen den Versteifungselementen 22, integrierte Streifen 80 aus CNT-Gitter aufweisen. Auch diese können unter elektrischen Strom gesetzt werden, um weiter herstellungsbedingten Deformationen entgegenzuwirken.

Die Vorrichtung 64 weist weiter eine nicht näher dargestellte Temperaturmesseinrichtung zur Messung der Temperatur an verschiedenen Bereichen 26, 28, 42, 30, 36 des Bauteils 10 auf.

Eine bevorzugte Ausgestaltung des Verfahrens umfasst vorzugsweise folgende Schritte:
- Durchgehendes Aufbringen eines Lösungsmittels mit langen Kohlenstoffnanoröhren
- Abdecken von Kohlenstoffnanoröhren an Verbindungsstellen 34, wobei sich diese zu einem Gitter verbinden;
- Anschalten des Laserstrahls 94, um ein Maß für den geradlinigen Verlauf zu messen;
- Anschließen der CNT-Gitter an eine Stromquelle 56;
- Messen der Temperatur und (automatisches) Regeln;
- Durchführen eines Schweißprozesses oder eines Co-Härtungsprozesses, Aufheizen in einer geeigneten Tiefe des Laminats durch Streifen 80 aus CNT-Gittern;
- Starten des Abkühlprozesses, Weiterheizen mit Streifen aus CNT;
- Eventuell: Aufnahme durch Kamera oder sonstige Aufzeichnungsmittel;
- Erhalten eines perfekt geradlinig verlaufenden Paneels als Bauteil 10.

Fig. 8 zeigt ein Beispeil für ein Luftfahrzeug 12 in Form eines Flugzeugs, das Bauteile 10, die durch ein solches Verfahren erhältlich sind, als Strukturbauteile enthält. Beispielsweise sind an den Deckpaneele an Flügeln 18 und Wandbereiche 14 des Rumpfs 16 mittels derartiger Bauteile 10 gebildet.

Demnach wird zur Vermeidung oder Verringerung von fertigungsbedingten Deformationen 38 bei Verbundmaterial-Bauteilen 10 mit dickeren und dünneren Materialbereichen 26, 28 eine lokale Beeinflussung der Temperatur im Inneren wenigstens eines der Bereiche 26, 28 während eines Abkühlprozesses vorgeschlagen. In einer bevorzugten Ausgestaltung werden hierzu Streifen 80 aus Kohlenstoffnanoröhren 52 in das Bauteil 10 eingebettet, so dass eine lokale Temperaturbeeinflussung durch inneres Aufheizen des Materials mittels des Remote-Joule-Heating-Effekts erfolgt.

### Bezugszeichenliste:

- 10: Bauteil
- 12: Luftfahrzeug
- 14: Wandbereich
- 16: Rumpf
- 18: Flügel
- 20: Hautelement
- 22: Versteifungselement
- 24: Verbundmaterial
- 26: erster Bereich
- 28: zweiter Bereich
- 30: Fuß
- 32: innerer Bereich (Beispiel für zweiten Teilbereich)
- 34: Verbindungsstelle
- 36: gegenüberliegende Oberfläche
- 38: Deformation
- 40: Haut-Versteifungselement-Anordnung
- 42: Haut
- 44: Zentrum der Wärmeverteilung
- 46: erster Teilbereich
- 48: Temperaturbeeinflussungselement
- 50: Heizelement
- 52: Kohlenstoffnanoröhre
- 54: Batterie
- 56: Stromquelle
- 58: Elektron
- 60: Faserlegeeinrichtung
- 62: Faserlagen
- 64: Vorrichtung
- 66: Temperaturbeeinflussungselementaufbringeinrichtung
- 68: Bahn
- 70: Rolle
- 72: Bahnverlegekopf
- 74: Lösungsmittelauftragseinrichtung
- 76: Lösungsmittel
- 80: Streifen aus CNT-Gitter
- 82: faserverstärktes Kunststoffband
- 84: Robotorarm
- 86: Spender
- 88: Deformationserfassungseinrichtung
- 90: Steuereinrichtung
- 92: Laserlinse
- 94: Laserstrahl
- 96: elektrischer Stromkreis
- 98: Belastungsprofil

## Patentansprüche

1. Verfahren zum Herstellen eines Bauteils (10) aus Faserverbundmaterial (24) mit einem ersten Bereich (26) mit dünnerer Materialstärke und einem zweiten Bereich (28) mit dickerer Materialstärke, umfassend die Schritte:
a) Ausbilden des Bauteils (10) unter Anwendung von Wärme,
b) Abkühlen des Bauteils (10) und
c) Messen einer Deformation (38) des Bauteils (10) und/oder einer mechanischen Spannung an dem Bauteil (10) und lokales Beeinflussen der Temperatur im Inneren des zweiten Bereichs (28), in Abhängigkeit von der Deformation (38) des Bauteils (10) und/oder der mechanischen Spannung an dem Bauteil (10), während des Abkühlens durch lokales Beheizen eines ersten Teilbereichs (46) des zweiten Bereichs (28), der näher an einer Oberfläche liegt als ein zweiter Teilbereich (32) des zweiten Bereichs (28),
wobei Schritt a) das Einbetten eines Heizelements (50) in den ersten Teilbereich (46) des zweiten Bereichs (28), welcher näher an einer Oberfläche ist, als ein zweiter Teilbereich des zweiten Bereichs (28) umfasst.

2. Verfahren nach Anspruch 1, **dadurch gekennzeichnet, dass** Schritt c) wenigstens einen, mehrere oder alle der Schritte umfasst:
c1) lokales Beheizen eines Tiefenbereichs des zweiten Bereichs (28);
c2) lokales Beheizen eines Teilbereichs des ersten Bereichs (26).

3. Verfahren nach einem der voranstehenden Ansprüche,
**dadurch gekennzeichnet,**
**dass** Schritt c) umfasst:
lokales Beheizen mittels des Remote-Joule-Heating-Effekts unter Verwendung von Kohlenstoffnanoröhren (52).

4. Verfahren nach einem der voranstehenden Ansprüche,
**dadurch gekennzeichnet,**
**dass** Schritt a) wenigstens einen, mehrere oder alle der Schritte umfasst:
a1) Ausbilden oder Formen des ersten Bereichs (26) als Wandbereich (14) eines Strukturbauteils eines Luftfahrzeugs (12) und des zweiten Bereichs (28) als mit einem Versteifungselement (22) versehener Wandbereich (14) des Strukturbauteils;
a2) Ausbilden oder Formen des Bauteils (10) aus einem Faserverbundmaterial (24), welches Kohlenstofffasern in einem thermoplastischen oder duroplastischen Matrixmaterial enthält;
a3) Ausbilden des Bauteils (10) als Bauteil aus der Gruppe von Bauteilen, die ein versteiftes Paneel für ein Luftfahrzeug (12), ein versteiftes Luftfahrzeugrumpfpaneel, ein versteiftes Luftfahrzeugflügelpaneel und ein versteiftes Hautelement (20) eines Strukturbauteils eines Luftfahrzeuges (12) enthält;
a4) Zusammensetzen des Bauteils (10) aus wenigstens einem Versteifungselement (22) und einem Hautelement (20);
a5) Verbinden eines Fußes (30) eines Versteifungselements (22) mit einem Hautelement (20);
a6) Ausbilden des ersten Bereichs (26) durch Formen, Anbringen oder Anformen eines Fußes (30) eines Versteifungselements (22) an einem Wandbereich (14) oder Hautbereichs des Bauteils (10);
a7) Anschweißen, Co-Härten oder Heißkleben eines Fußes (30) eines Versteifungselements (22) an ein Hautelement (20);
a8) Einbetten eines Temperaturbeeinflussungselements (48) in wenigstens einen Bereich;
a9) Einbetten eines Heizelements (50) in einem ersten Teilbereich (46) des zweiten Bereichs (28), welcher Teilbereich (46) näher zu einer einem Versteifungselement (22) abgewandten Oberfläche (36) als zu einer Verbindungsstelle (34) zwischen dem Versteifungselement (22) und einem Hautelement (20) liegt;
a10) Platzieren von Ketten, Streifen (80) oder Schnüren aus Kohlenstoffnanoröhren (52) in oder an dem zweiten Bereich (28);
a11) Platzieren von Ketten, Streifen (80) oder Schnüren aus Kohlenstoffnanoröhren (52) in oder an dem ersten Bereich (26);
a12) Ausbilden eines Gitters aus Kohlenstoffnanoröhren (52) durch Aufbringen oder Auftragen eines Kohlenstoffnanoröhren (52) enthaltenden Lösungsmittels (76);
a13) Schichtweises Verlegen von Faserlagen (62) und Auftrag eines Temperaturbeeinflussungselements (48) auf wenigstens eine Faserlage (62); und/oder
a14) Anbringen von länglichen Heizelementen (50) unterhalb eines Fußes (30) eines Versteifungselements (22).

5. Verfahren nach einem der voranstehenden Ansprüche,
**dadurch gekennzeichnet,**
**dass** Schritt a) das Einbetten wenigstens eines durch elektrischen Strom betriebenen Temperaturbeeinflussungselements (48) in wenigstens einen Bereich umfasst und
**dass** Schritt c) das Steuern oder Regeln eines Stromflusses zu dem wenigstens einen Temperaturbeeinflussungselement (48) während des Abkühlens umfasst.

## Claims

1. Method for producing a component (10) made of fibre composite material (24) having a first region (26) with a relatively thin material thickness and a second region (28) with a relatively thick material thickness, comprising the steps of:
a) forming the component (10) using heat,
b) cooling the component (10), and
c) measuring a deformation (38) of the component (10) and/or a mechanical stress on the component (10) and locally influencing the temperature in the interior of the second region (28), in dependence on the deformation (38) of the component (10) and/or the mechanical stress on the component (10), during the cooling by locally heating a first sub-region (46) of the second region (28), said first sub-region being closer to a surface than a second sub-region (32) of the second region (28), wherein step a) comprises the embedding of a heating element (50) in the first sub-region (46) of the second region (28), said first sub-region being closer to a surface than a second sub-region of the second region (28) .

2. Method according to Claim 1, **characterized in that** step c) comprises at least one, several or all the steps of:
c1) locally heating a depth region of the second region (28) ;
c2) locally heating a sub-region of the first region (26) .

3. Method according to either of the preceding claims, **characterized**
**in that** step c) comprises:
local heating by means of the remote Joule heating effect using carbon nanotubes (52).

4. Method according to one of the preceding claims, **characterized**
**in that** step a) comprises at least one, several or all the steps of:
a1) forming or shaping the first region (26) as a wall region (14) of a structural component of an aircraft (12), and the second region (28) as a wall region (14), which is provided with a stiffening element (22), of the structural component;
a2) forming or shaping the component (10) from a fibre composite material (24) that contains carbon fibres in a thermoplastic or thermoset matrix material;
a3) forming the component (10) as a component from the group of components that includes a stiffened panel for an aircraft (12), a stiffened aircraft fuselage panel, a stiffened aircraft wing panel and a stiffened skin element (20) of a structural component of an aircraft (12) ;
a4) assembling the component (10) from at least one stiffening element (22) and a skin element (20);
a5) connecting a foot (30) of a stiffening element (22) to a skin element (20);
a6) forming the first region (26) by shaping, mounting or forming a foot (30) of a stiffening element (22) on a wall region (14) or skin region of the component (10);
a7) welding, co-curing or hot adhesive bonding a foot (30) of a stiffening element (22) onto a skin element (20) ;
a8) embedding a temperature-influencing element (48) in at least one region;
a9) embedding a heating element (50) in a first sub-region (46) of the second region (28), which sub-region (46) is closer to a surface (36) facing away from a stiffening element (22) than to a connecting point (34) between the stiffening element (22) and a skin element (20) ;
a10) positioning chains, strips (80) or cords made of carbon nanotubes (52) in or on the second region (28);
a11) positioning chains, strips (80) or cords made of carbon nanotubes (52) in or on the first region (26);
a12) forming a lattice of carbon nanotubes (52) by applying or depositing a solvent (76) containing carbon nanotubes (52);
a13) laying fibre plies (62) in layers and depositing a temperature-influencing element (48) on at least one fibre ply (62); and/or
a14) mounting elongate heating elements (50) below a foot (30) of a stiffening element (22).

5. Method according to one of the preceding claims, **characterized**
**in that** step a) comprises the embedding of at least one temperature-influencing element (48), which is powered by electrical current, in at least one region, and
**in that** step c) comprises the controlling or regulating of a current flow to the at least one temperature-influencing element (48) during the cooling.

## Revendications

1. Procédé de fabrication d'un composant (10) en matériau composite fibreux (24) doté d'une première zone (26) d'une épaisseur de matériau plus fine et d'une deuxième zone (28) d'une épaisseur de matériau plus forte, comprenant les étapes consistant à :
a) réaliser le composant (10) en appliquant de la chaleur,
b) refroidir le composant (10), et
c) mesurer une déformation (38) du composant (10) et/ou une tension mécanique au niveau du composant (10), et influencer localement la température à l'intérieur de la deuxième zone (28) en fonction de la déformation (38) du composant (10) et/ou de la tension mécanique au niveau du composant (10) pendant le refroidissement en chauffant localement une première zone partielle (46) de la deuxième zone (28) qui est située plus près d'une surface qu'une deuxième zone partielle (32) de la deuxième zone (28),
l'étape a) comprenant l'incorporation d'un élément chauffant (50) dans la première zone partielle (46) de la deuxième zone (28) qui est plus près d'une surface qu'une deuxième zone partielle de la deuxième zone (28) .

2. Procédé selon la revendication 1, **caractérisé en ce que** l'étape c) comprend au moins une, plusieurs ou toutes les étapes consistant à :
c1) chauffer localement une zone de profondeur de la deuxième zone (28) ;
c2) chauffer localement une zone partielle de la deuxième zone (26).

3. Procédé selon l'une quelconque des revendications précédentes, **caractérisé en ce que** l'étape c) comprend :
le chauffage local au moyen d'un effet Joule à distance en utilisant des nanotubes de carbone (52).

4. Procédé selon l'une quelconque des revendications précédentes, **caractérisé en ce que** l'étape a) comprend au moins une, plusieurs ou toutes les étapes consistant à :
a1) réaliser ou former la première zone (26) comme une zone de paroi (14) d'un composant structurel d'un aéronef (12) et la deuxième zone (28) comme une zone de paroi (14) du composant structurel, munie d'un élément raidisseur (22) ;
a2) réaliser ou former le composant (10) d'un matériau composite fibreux (24) qui contient des fibres de carbone dans un matériau de matrice thermoplastique ou thermodurcissable ;
a3) réaliser le composant (10) sous la forme d'un composant issu du groupe de composants qui comprend un panneau renforcé pour un aéronef (12), un panneau de fuselage d'aéronef renforcé, un panneau d'aile d'aéronef renforcé et un élément de revêtement renforcé (20) d'un composant structurel d'un aéronef (12) ;
a4) assembler le composant (10) à partir d'au moins un élément raidisseur (22) et d'un élément de revêtement (20) ;
a5) relier un pied (30) d'un élément raidisseur (22) à un élément de revêtement (20) ;
a6) réaliser la première zone (26) en formant, en rattachant ou en rapportant un pied (30) d'un élément raidisseur (22) à une zone de paroi (14) ou une zone de revêtement du composant (10) ;
a7) souder, co-durcir ou thermocoller un pied (30) d'un élément raidisseur (22) sur un élément de revêtement (20) ;
a8) incorporer un élément influençant la température (48) dans au moins une zone ;
a9) incorporer un élément chauffant (50) dans une première zone partielle (46) de la deuxième zone (28), ladite zone partielle (46) étant située plus près d'une surface (36) détournée d'un élément raidisseur (22) que d'un point de jonction (34) entre l'élément raidisseur (22) et un élément de revêtement (20) ;
a10) placer des chaînes, des rubans (80) ou des cordes de nanotubes de carbone (52) dans ou sur la deuxième zone (28) ;
a11) placer des chaînes, des rubans (80) ou des cordes de nanotubes de carbone (52) dans ou sur la première zone (26) ;
a12) réaliser un réseau de nanotubes de carbone (52) en répandant ou appliquant un solvant (76) contenant des nanotubes de carbone (52) ;
a13) poser par couches des couches de fibres (62) et appliquer un élément influençant la température (48) sur au moins une couche de fibres (62) ; et/ou
al4) rattacher des éléments chauffants allongés (50) au-dessous d'un pied (30) d'un élément raidisseur (22) .

5. Procédé selon l'une quelconque des revendications précédentes, **caractérisé**
**en ce que** l'étape a) comprend l'incorporation dans au moins une zone d'au moins un élément influençant la température (48) actionné par un courant électrique, et
**en ce que** l'étape c) comprend la commande ou la régulation d'un flux de courant jusqu'audit au moins un élément influençant la température (48) pendant le refroidissement.
